(19) Europäisches Patentamt
European Patent Office
Office européen des brevets

(11) **EP 2 354 940 A1**

(12) **EUROPEAN PATENT APPLICATION**

(43) Date of publication:
**10.08.2011 Bulletin 2011/32**

(51) Int Cl.:
***G06F 9/455*** *(2006.01)* ***G06K 9/00*** *(2006.01)*

(21) Application number: **10003655.7**

(22) Date of filing: **01.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **01.02.2010 EP 10000998**

(71) Applicant: **Siemens Aktiengesellschaft**
**80333 München (DE)**

(72) Inventors:
• **Davidich, Maria**
**82061 Neuried (DE)**
• **Köster, Gerta**
**81543 München (DE)**

(54) **Calibration of stream models and stream simulation tools**

(57) Every year people die at mass events when the crowd gets out of control. Urbanization and the increasing popularity of mass events, from soccer games to religious celebrations, enforce this trend. Thus, there is a strong need to gain better control over crowd behavior. Simulation of pedestrian streams can help to achieve this goal. In order to be useful, crowd simulations must correctly reproduce real crowd behavior. This usually depends on the actual situation and a number of socio-cultural parameters. In other words, what ever model we come up with, it must be calibrated. Fundamental diagrams capture a large number of the socio-cultural characteristics in a very simple concept. In this invention a method to calibrate a pedestrian stream simulation tool is described to reproduce arbitrary fundamental diagrams (e.g. Waldmann diagram) with high accuracy. That is, it correctly reproduces a phenomenon (e.g. a given dependency of pedestrian speed on the crowd density).

providing sets of model parameters $(p_1,\ldots,p_n)$ — S1

determining for each set of the model parameters $(p_1,\ldots,p_n)$ the fitness $f_p$ and the sensitivity $s_p$ — S2

selection of model parameters — S3

configuring the motion simulation device — S4

FIG 3

EP 2 354 940 A1

**Description**

The present invention is directed to a method and an apparatus for calibration of a pedestrian stream simulator in real time and especially for efficiently configuring a motion simulation device. The present invention is furthermore directed to a computer program being adapted to perform said method and a data carrier which stores said computer program.

Every year people die at mass events when the crowd gets out of control. Urbanization and the increasing popularity of mass events, from soccer games to religious celebrations, enforce this trend. Thus, there is a strong need to gain better control over crowd behavior. Simulation of pedestrian streams can help to achieve this goal. In order to be useful, crowd simulations must correctly reproduce real crowd behavior. This usually depends on the actual situation and a number of socio-cultural parameters.

Simulators of pedestrian streams imitate the behavior of crowds in different infrastructures and places, such as buildings, stadiums, etc., for instance for statistical purposes, for administrative purposes and furthermore for safety reasons of pedestrians and traffic participants. One goal of pedestrian stream simulation is to gain improved control over crowd behavior and especially to predict crowd behavior. Off line simulations allow re-enacting several scenarios and critical situations and hence finding adequate measures for avoiding dangers and thus for improving security.

A variety of potentially dangerous scenarios is known. These scenarios range from environmental disasters to cultural events. In case of emergency it is required to evacuate people as fast as possible. In order to deliver reliable results crowd simulations must correctly reproduce crowd behavior. Hence, a crowd simulation model must capture important parameters of crowd behavior. Commonly known methods therefore apply a gradually increasing of details of modelling and comparing simulation results and empirical data. The underlying rules of interactions can be assumed to be general to a certain degree depending on a large number of parameters. Rather general rules of interaction cannot be expected to capture every situation and need to be adapted to the scenario of interest. Hence, the model of pedestrian streams must be calibrated. Calibration may refer to the adaption of the model of pedestrian streams through specific information of the real world. Commonly known dependencies are for example the basic environmental conditions as structural constraints imposed by the architecture of a surrounding building, as well as socio-cultural aspects.

In commonly known methods fundamental diagrams are used for predicting behavior. One may for instance apply an empirically derived fundamental diagram of pedestrian dynamics. Such a diagram of pedestrian dynamics may for instance indicate that there is a relation between the density of pedestrians and walking speed. Also a scenario dependency can be indicated, such as that the walking speed in one direction depends on the density of pedestrians moving in the opposite direction.

Commonly known methods perform pedestrian stream simulation and calibration thereof for known data from literature in an off-line way. Off-line refers to non-real-time calibrations of pedestrian stream simulation devices. Commonly known methods are complex and resource intense, which results in long time durations for calibration of a motion simulation device. What is therefore required is a method, which provides an initial configuration of the motion simulation device, which is reliable enough to require only a minimum of further fine tuning.

It is therefore an object of the present invention to provide a method and an apparatus for configuring a motion simulation device efficiently, allowing predictions of motion behaviors in real-time.

This object is solved by a method for efficiently configuring a motion simulation device, wherein the motion simulation device is based on a simulation model for ensuring a precise and reliable reproduction of a phenomenon of interest, the method comprising the steps of:

providing sets of model parameters $(p_1,...,p_n)$ representing motion behavior of entities, wherein sets of model parameters $(p_1,...,p_n)$ are achieved from a data base and/or gained from an online monitoring system;
determining for each set of the model parameters $(p_1,...,p_n)$ the fitness $f_p$ and the sensitivity $s_p$;
selecting among the parameter sets having similar fitness the parameter set having the lowest sensitivity and/or selecting among the parameter sets having similar sensitivity the parameter set having the highest fitness for operating the motion simulation device; and
configuring the motion simulation device with the selected parameter set. It is possible to implement a motion simulation device especially for an automotive application scenario, such as pedestrian motion behavior predictions. Hence, pedestrian movements before and/or behind a car can be predicted, which may trigger an alarm signal or other safety measures. It is also of advantage to implement a software-based motion simulation device which allows motion behavior in different application scenarios, such as evacuation of people in case of an emergency.

A model parameter may describe observed entity motion behaviour and can therefore be obtained from real world observation. Furthermore one can determine model parameters manually for configuration of a motion simulation model. Hence, said model parameter is obtained artificially. Said model parameter may be used for affecting the behaviour of the motion simulation model in terms of configuration parameters for rules being used by the motion simulation model.

A set of said artificially determined model parameter can be summarized in deceleration classes. Deceleration classes can be used for indicating how much entities decelerate in case a certain density occurs. Thus, deceleration classes configure a rule being part of the motion simulation model, the rule modelling a deceleration behavior.

A static parameter may be determined a priori to the simulation and are fixed as regards the observed time interval, such as the location based parameters. Different scenarios can be identified as a function of said static parameters. Model instances may be determined as a function of static parameters. It may be the case that only a selection of static parameters is known.

A model parameter may not be observable or configurable, but may affect a motion simulation model. A model parameter may be comprised in a deceleration class.

The motion simulation device may operate according to a motion simulation model, defining abstract motion parameters. A model parameter is for instance a parameter describing characteristics of a motion of an entity. Hence, a model parameter is not restricted to a parameter describing a pedestrian behavior but may furthermore be directed to movements of any entity, such as a car, a plane, a robot, a signal transmitting device and/or a traffic participant. A signal transmitting device is for instance a mobile phone which is carried through different cells and/or radio cells. Furthermore, motion of vehicles having a GPS-transmitter attached can be described by a motion parameter. The set of model parameters $(p_1,...,p_n)$ can also comprise model instances derived from model parameters $(p_1,...,p_n)$. A model parameter is for instance a velocity of pedestrians or vehicles.

For obtaining entity motion predictions a motion simulation model can be applied. A motion simulation model generally describes entity motion behavior in an abstract way, which can be instantiated according to specific real world scenarios. A motion simulation model may indicate certain parameters without assigning values to said parameters. The motion simulation model can furthermore indicate that certain parameters may be required for predicting entity motion behavior. It is of advantage, to create a set of rules and/or an ontology to define said motion simulation model. A further possibility to implement said motion simulation model is to apply a software or a computer program product defining configuration data of a machine providing said motion simulation model. The person skilled in the art furthermore appreciates other ways to provide the motion simulation model.

The task of every model (and therefore also for a motion simulation model) is a precise and reliable reproduction of a phenomenon of interest. For this, values of parameters are chosen in such a way that the model reproduces the phenomenon with maximum or at least acceptable precision, or as often called fitness. However, fitness is an essential but not a sufficient criterion for a good selection of parameter values.

For a reliable representation of a phenomenon, the values of the parameters should be also insensitive to disturbances, that is, they should be robust. Robustness is the quality and capability of being able to withstand stresses, pressures, or changes in procedure or circumstance. A system, organism or design may be said to be "robust" if it is capable of coping well with variations (sometimes unpredictable variations) and changes in its operating environment with minimal damage, alteration or loss of functionality. Robustness is among other properties important for pedestrian stream simulations. Simulators of pedestrian streams imitate the behavior of crowds in different infrastructures and places (such as buildings, stadiums, ...) for statistical, economical purposes and, above all, to improve the safety for the population. The goal is to gain better control over crowd behavior. Simulations of pedestrian streams contribute to this by improving off line planning: Simulations allow running through a number of scenarios in a critical situation and thus to find adequate measures to avoid dangers and to improve security. Simulations also help to predict likely developments of pedestrian streams. To achieve this, crowd simulations must correctly reproduce real behavior depending on the actual situation. For this, the parameters of the code must be adjusted to measured data- they must be calibrated. When the simulation runs with a certain set of well adjusted parameter values, socio-cultural behavior in a crowd, as captured in a so-called fundamental diagram, is well reproduced. A good fitness is seen.

In reality, however, no adjustment will be perfect. For example, values of velocities are not known exactly, but with some certain uncertainty and can vary in some area. The question is, to which extent the precision of the model decays if the pedestrian velocities are not known exactly, but with some uncertainty coming for example from measurement errors, or if the parameters vary. This leads to the question of robustness: How will small changes in a fit parameter choice affect the results? Will the impact on fitness be significant? Obviously of two parameter sets with similar fitness the one is preferable that suffers the smaller effects when slightly altered. The more robust parameter set is preferable. The present invention showss a method to measure and judge the robustness of parameter sets and to select robust parameter sets to ensure that a small deviation from the optimal parameter set will not lead to large incorrect changes in the simulation results, especially for motion simulation and for the prediction of motion behavior of entities (e.g. pedestrians or vehicles).

A first embodiment of the invention is that the step "determining for each set of the model parameters $(p_1,...,p_n)$ the fitness $f_p$ and the sensitivity $s_p$" comprises:

for each set of model parameters $(p_1,...,p_n)$ which reaches determined thresholds for fitness and sensitivity:

systematically disturbing the set of model parameters ($p_1,...,p_n$);
measuring the fitness and the sensitivity of the disturbed parameter sets;
comparing all disturbed parameter sets regarding the respective fitness and the respective sensitivity; and
grouping disturbed parameter sets having similar fitness and grouping disturbed parameter sets having similar sensitivity. Systematically disturbing the parameter sets and measuring and comparing the obtained fitness and the sensitivity (or robustness) of the disturbed parameter sets leads to a selection of good parameters for the simulation model based on the fitness and the robustness.

A second embodiment of the invention is that the step "comparing all disturbed parameter sets regarding the respective fitness and the respective sensitivity" comprises originally undisturbed parameter sets which stay below the threshold for sensitivity and are within the margins for fitness. This increases the base for determining the fitness and the sensitivity (or robustness) of the parameter sets and improves the parameter selection for the simulation model.

A further embodiment of the invention is that the step "systematically disturbing the set of model parameters ($p_1,...,p_n$)" is performed by randomly disturbing the parameters $p_i$ within given intervals. An easy way to determine disturbed fitness values is to randomly disturb the parameters pi within given intervals by using random number generators and calculate the (disturbed) fitness for each random disturbance. In that case we propose to determine a mean disturbed fitness by summing the disturbed fitness values and dividing by the number of disturbances.

A further embodiment of the invention is that the motion simulation device is used for simulating a pedestrian stream model. This has the advantage that not only entity motion streams but especially pedestrian motion streams can be predicted. Predictions can be created as a function of simulation runs.

A further embodiment of the invention is that the method is used for calibrating, especially online calibrating, of prediction models according the measured phenomenon. Especially for predicting movements of human beings (e.g. pedestrians or visitors of a mass event) online calibration of human behavior parameters is important to gain reliable predictions of the movements of the human beings especially in cases of emergencies or panic so that police or security staff can react properly. The human behavior parameters vary with the type of crowd, such as nationality, culture, gender distribution, age distribution and also the time of day, such as level of fitness, exhaustion or even the weather. All these differences ultimately show their effect in the way people walk - as individuals in an open space and as members in a crowd. There is an aggregated model that is considered to be suitable to capture most - or at least many of the relevant - behavioral parameters in a very simple concept: The dependency of the walking speed on the density. Or, equivalently, the dependency of the flow on the density. This dependency is expressed in the so-called fundamental diagrams. One can calibrate the human behavior by adjusting the walking speed to the fundamental diagram. The method for configuring the motion simulation device can be applied for calibration of pedestrians' velocities for different densities. As reference curve one can for instance choose a modified Weidman fundamental diagram and a threshold accepting algorithm being applied as a local search algorithm.

A further embodiment of the invention is that the inventive method further comprises the step "controlling movements of pedestrians and/or vehicles based on the predicted behavior of tracked pedestrians and/or vehicles provided by a prediction model". This enables a situation adequate online controlling, directing, and regulating of pedestrian streams or vehicles based on data provided by a prediction model. Controlling of the movements of pedestrians and/or vehicles is performed by using information signs, indicators or by opening/closing of gateways/doors/streets.

A further embodiment of the invention is that the model parameters ($p_1,....p_n$) comprise model instances derived from model parameters. This enables that model parameters can comprise model instances derived from or based on a subset of the model parameters. This allows a mixture of different parameter types. Some of the model parameters representing the motion behavior of entities can be "plain (single)" parameters and some model parameters can be model instances or sub models. This increases the flexibility, adaptability, scalability, and the accuracy of the simulation model and the simulation device according to the underlying requirements. Furthermore the complexity regarding the number of the applied model parameters is reduced because one model instance can represent several model parameters. It is also possible that the model parameters comprise only single parameters or only model instances.

A further embodiment of the invention is that the model parameters ($p_1,...,p_n$) comprise: a number of pedestrians and/or a source where pedestrians come from and/or a target where pedestrians go to and/or a pedestrian behavior parameter and/or a time stamp and/or a pedestrian's gender and/or a pedestrian's age and/or a pedestrian's speed and/or a density of pedestrians and/or a pedestrian simulation parameter. This also increases the accuracy and the precision of the simulation model and the simulation device.

A further embodiment of the invention is that the step "configuring the motion simulation device with the selected parameter set" comprises automatically online calibrating of the model parameters ($p_1,...,p_n$). This assures a high match of real situation and of real life behavior of the entities being observed (e.g. pedestrians or human beings attending a mass event).

A further embodiment of the invention is that the online monitoring system is a video tracking system for pedestrians and/or vehicles or is a radio system (e.g. a RFID sensor system) for tracking pedestrians and/or vehicles.

The gained video streams and the RFID sensor data can easily be provided online and for real time further processing. The configuring and the calibration of the motion simulation device based on real time assures a high accuracy of the simulation device and assures a precise prediction of the behavior of the entities being monitored. A suitable RFID sensor system can comprise passive or active RFID transponder.

The object is further solved by an apparatus for efficiently configuring a motion simulation device, said apparatus comprising:

a storage unit for the provided sets of model parameters $(p_1,...,p_n)$;

a measurement unit for determining for each set of the model parameters $(p_1,...,p_n)$ the fitness $f_p$ and the sensitivity $s_p$;

a selection unit for selecting among the parameter sets having similar fitness the parameter set having the lowest sensitivity and/or selecting among the parameter sets having similar sensitivity the parameter set having the highest fitness for operating the motion simulation device; and

a configuration unit for configuring the motion simulation device according the selected parameter set. The introduced method and apparatus, which allow configuring a motion simulation device based on an initially observed model parameters and/or model instances, can be fine tuned in further sub-steps. Due to the low complexity of the method for efficiently configuring the motion simulation device creating real time predictions of entity motion behavior are possible.

A further embodiment of the invention is that the apparatus further comprises a disturbing unit for systematically disturbing the set of model parameters $(p_1,...,p_n)$ for each set of model parameters $(p_1,...,p_n)$ which reaches the respective threshold for fitness and sensitivity and for measuring the fitness and the sensitivity of the disturbed parameter sets and for comparing all disturbed parameter sets regarding the respective fitness and the respective sensitivity. The disturbing unit increases the base for determining the fitness and the sensitivity (or robustness) of the parameter sets and improves the parameter selection for the simulation model and for the motion simulation device.

A further embodiment of the invention is that the apparatus further comprises an interface to an online monitoring system for tracking pedestrians and/or vehicles; and an interface to a control room, the control room using automatically online calibrated model parameters $(p_1,...,p_n)$ for predicting the behavior of the tracked pedestrians and/or vehicles. This enables that online data streams of monitored and tracked pedestrians and/or vehicles can be used for real time calibration of a motion simulation device. In a control room for e.g. monitoring a mass event (e.g. Super Bowl or Bundesliga soccer games) highly accurate data can be used for precise real time predictions of the behavior of the mass in for instance panic situations. The control room can react adequately on the respective real world situation.

A further embodiment of the invention is that the apparatus further comprises an interface to indicators for controlling movements of pedestrians and/or vehicles based on the predicted behavior of the tracked pedestrians and/or vehicles. Controlling of the movements of pedestrians and/or vehicles is performed by using information signs, indicators, text information on boards or by opening/closing of gateways/doors/streets.

The present invention furthermore provides a computer program being adapted to perform at least one of the afore-mentioned methods, as well as a data carrier, which stores said computer program. The data carrier or storage medium may be a built-in medium installed inside a computer device main body or a removable medium arranged so that it can be separated from the computer device main body. Examples of the built-in medium include, but are not limited to, rewriteable non-volatile memories and flash memories, and hard disks. Examples of the removable medium include, but are not limited to, optical storage media such as CR-ROMs and DVDs; magnetooptical storage media, such as MOs; magnetism storage media, including but not limited to floppy disks, cassette tapes, and removable hard disks; media with a built-in rewriteable non-volatile memory, including but not limited to memory cards; and media with a built-in ROM, including but not limited to ROM cassettes; etc. Furthermore, various information regarding application data, application services, or common information models may be stored in any other form, or it may be provided in other ways.

Brief description of the drawings

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:

In the following possible embodiments of the method and the apparatus for efficiently configuring a motion simulation device are described with reference to the enclosed figures.

Figure 1    shows a cellular automaton for modelling pedestrian movements as being applied in an exemplary embodiment of the method and the apparatus according to an aspect of the present invention,

Figure 2     shows the creation of a model instance as being applied in one embodiment of the method according to an aspect of the present invention,

Figure 3     shows an exemplary flow diagram of a method for efficiently configuring a motion simulation device according to an aspect of the present invention,

Figure 4     shows a schematic block diagram of an apparatus for efficient configuration of a motion simulation device according to an aspect of the present invention,

Figure 5     shows an exemplary curve of an uncalibrated simulation model,

Figure 6     shows an exemplary curve of a calibrated simulation model,

Figure 7     shows a first diagram illustrating optimization results with the genetic algorithm,

Figure 8     shows a second diagram illustrating optimization results with the genetic algorithm,

Figure 9     shows a diagram comparing the fitness value gained from a genetic algorithm and gained from a threshold accepting algorithm respectively based on disturbed deceleration classes,

Figure 10     shows a diagram comparing the sensitivity value gained from a genetic algorithm and gained from a threshold accepting algorithm respectively based on disturbed deceleration classes.

Figure 11     shows a plot illustrating sensitivity analysis with local disturbances,

Figure 12     shows a plot illustrating how the fitness decays with the number of parameters pi that are disturbed,

Figure 13     shows a diagram comparing the sensitivity of the optimal parameter sets obtained by two different optimization algorithms,

Figure 14     shows a plot illustrating a multidimensional sensitivity analysis, and

Figure 15     shows an exemplary scenario using the inventive method and apparatus for a control center.

Description of the preferred embodiments

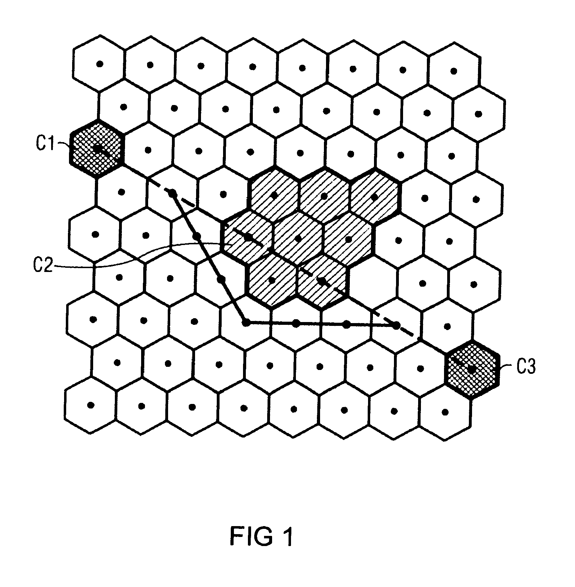

It will be readily understood that the components of the present invention, as generally described and illustrated in the Figures herein, may be arranged and designed in a wide variety of different configurations. Thus, the following more detailed description of the embodiments of the present invention, as represented in Figures 1 through 11, is not intended to limit the scope of the invention, as claimed, but is merely representative of selected embodiments of the invention. The invention can be performed by using hardware and/or software.

Figure 1 shows a cellular automaton based on a grid with hexagonal cells as being used by the method for efficiently configuring the motion simulation device according to an aspect of the present invention. Pedestrians move from a source to a target avoiding obstacles on the way. We prefer a hexagonal grid over a square grid for its 2 additional 'natural'directions of movement According to an embodiment of the present invention pedestrian or entity motion can be simulated using a discretization of the simulation area by means of cells, which are hexagonal in the present embodiment. Said cells may in other embodiments be triangular or rectangular, among others. At every time step of the simulation procedure of an entity motion a cell has a state being defined by the number of pedestrians or entities being located on this cell. Pedestrians or entities move from one cell to another thus changing the state of each of the cells.

In the present embodiment an entity is located at cell C 1 and desires to move forward to cell C3. The entity being located in cell C1 may proceed directly to cell C3, which is indicated in the present figure 1 by a dashed line. As the entity being located in C 1 encounters an obstacle, for instance cell C2, it may not be possible to move directly from the location C 1 to the cell C3. In this embodiment it may be required to move around the obstacle, for instance cell C2, which is indicated by a line in the present figure 1. The cell model as demonstrated in figure 1 may be a part of a motion simulation model. Different velocities of entities can be implemented by allowing the entity to proceed over several cells per simulation step. Hence, in the present embodiment velocity can also be referred to as cell speed indicated by the number of cells covered per simulation step.

In the present embodiment the entity moving from cell C 1 to a cell C3 is a pedestrian. Cell C 1 represents an elevator transporting pedestrians from a subway station to the surface. Cell C 1 therefore acts as a source of pedestrians. Pedestrians may proceed across a public place by moving around a shop being represented by cell C2 and proceed to an exit, being represented by cell C3. Therefore, cell C3 acts as a pedestrian sink.

The basic cell model, as being introduced by the present figure 1, leaves degrees of freedom to be chosen, such as the individual speeds of pedestrians. Individuals may move at a specific velocity, which can be a sample of a Gaussian random distribution, parameterized by mean and standard deviation that depend on circumstances like gender, age, day time, place, among others. In crowds, pedestrians speed decreases because of obstructions imposed by other pedestrians. Deceleration of pedestrians may also depend on the density of pedestrians. This aspect can be modelled by deceleration classes and slow down factors for velocities depending on the occupancy of neighbouring cells by other pedestrians. It may therefore be the case, that in cell C 1 several pedestrians are located. It may further be possible, to define a threshold of pedestrians per cell, which indicates, that the specific cell holds the state of being occupied and therefore representing an obstacle for further pedestrians.

The cell model as being described in the present figure 1 may be a part of the motion simulation model, while the modelling of pedestrian or entity motion behavior is by no means restricted to the cell model. The person skilled in the art therefore appreciates further implementations of a motion simulation model, such as an ontology, a set of rules, a formal model and/or a semi-formal model.

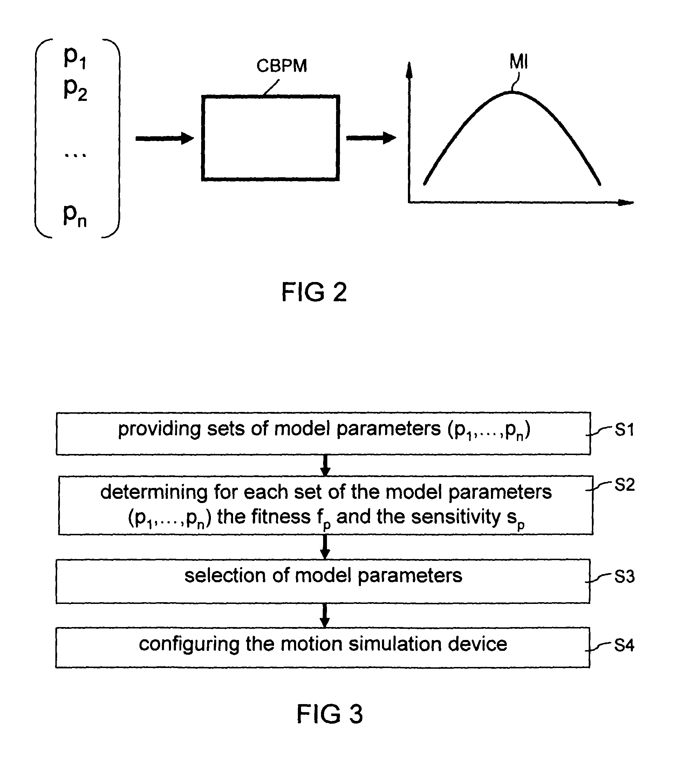

Figure 2 shows a schematic illustration of the creation of a model instance MI as being applied in an embodiment of the method according to an aspect of the present invention. Therefore, model parameters $p_1$, $p_2$, ..., $p_n$ are provided, for instance in a vector representation. Each model parameters $p_1$, $p_2$, ..., $p_n$ has one value assigned. The at least one model parameter may be referred to as a motion parameter vector. The model parameter vector serves in the present embodiment as an input for a crowd behavior prediction machine CBPM, which can be implement by a computer program product. In the present embodiment one model parameter $p_1$ is formed by a density parameter. The density parameter describes a number of entities being located on one square meter. A further model parameters $p_2$ may for instance represent a flow of entities. The resulting model instance MI may for instance be represented in a diagram, which indicates the density on the x-axis and the flow on the y-axis. A model instance may generally be represented in an n-dimensional space, wherein n refers to the number of motion parameters by which the model instance is formed. The person skilled in the art may furthermore appreciate other representations of a model instance. Using model instances MI increases the accuracy and the performance of the simulation model and the simulation device and reduces the complexity because one model instance represents several model parameters.

Figure 3 shows an exemplary flow diagram of a method for efficiently configuring a motion simulation device according to an aspect of the present invention. In step S 1 sets of model parameters $(p_1,...,p_n)$ representing motion behavior of entities (e.g. pedestrians or vehicles) are provided. The sets of model parameters $(p_1,...,p_n)$ can be achieved from a data base (library) and/or gained from an online monitoring system (e.g. a video surveillance or monitoring system). In step S2 for each set of the model parameters $(p_1,...,p_n)$ the fitness $f_p$ and the sensitivity $s_p$ are determined. Fitness measures the quality of a represented solution. As fitness one can propose to use a value which is inversely to the sum of squares between a diagram obtained from simulations and the chosen fundamental diagram. In general one can choose other functions of fitness, as for example, one can add different weight coefficients for different parts of diagrams. Due to normalisation the fitness is acceptable, when its value may be around 1. A parameter set is sensitive, if disturbances in the parameter set lead to a strong decay of fitness. The parameter set is robust, if its sensitivity is low. In step S3 among the parameter sets having similar fitness the parameter set having the lowest sensitivity is selected and/or among the parameter sets having similar sensitivity the parameter set having the highest fitness for operating the motion simulation device is selected. In step S3 the motion simulation device is configured by using the selected parameter set.

In the following exemplary embodiments of the invention is described in more detail:

In this invention, models are considered that are calibrated using a given set of parameters according to a given target function in order to precisely reproduce a phenomenon and to predict likely further development. An example for such a model is among others a pedestrian stream simulation model, where velocity parameters are used to reproduce a certain socio-cultural behavior given through a target function, the fundamental diagram. The main task is to measure, to which degree the precision of such a model will decay if the values of the parameter set used for calibration are not known with certainty or may vary to some extent. This uncertainty may, for example, arise from errors in measurements or changes in the underlying situation. However, only a robust model is able to make stable predictions.

This invention proposes a method to measure and judge the robustness of parameter sets and to select robust parameter sets to ensure that a small deviation from the optimal parameter set will not lead to large incorrect changes in the simulation results.

The inventive approach comprises method steps that are described in more detail further below:

- Step1: We propose a concept of sensitivity - and equivalently robustness - suitable for the calibration task described above.

  o We call a parameter set sensitive, if disturbances in the parameter set lead to a strong decay of fitness. In earlier inventions, we called a parameter set fit, if it leads to a precise calibration that is a good rendition of the target functions. The parameter set is robust, if its sensitivity is low.
  o We also propose quantitative measures for sensitivity and, equivalently, robustness that are described further below.

- Step 2: We describe a method to select good parameter choices based on the fitness and the robustness. For this we propose to systematically disturb the parameter sets, to measure and compare the sensitivity of the disturbed parameter sets.

- Step 3: Optionally we propose several ways to visually compare the fitness and the robustness or sensitivity of parameter sets with the help of suitable diagrams.

**Ad step 1: The concept of sensitivity.**

Preliminary steps:

The definition of sensitivity is based on a measure for the precision with which a model reproduces a measured phenomenon. In previous invention we introduced such a measure, called fitness, for pedestrian stream simulations:

$$\text{Fitness} = 1/\sum ( S_i - F_i)^2,$$

where $S_i$ is a value obtained from simulations, $F_i$ is a value of the reference curve for the same value of the argument. The values of $S_i$ and $F_i$ depend on the unit of measurement. Therefore, the fitness defined above also depends on the unit of measurement (cm, m, etc.).

We will assume in this invention report, that a suitable measure for fitness, such as given in the previous invention is available and that a threshold for a minimal acceptable fitness is known. Values below that threshold indicate an imprecise fit - or lack of fitness. For example, with our previous definition of fitness and our example simulations measured in meters for pedestrian stream simulations, fitness values about 1 indicate an acceptable fitness, and values significantly smaller than 1 indicate a bad fit. The higher the fitness, the more precise a model is. Note, that to calculate the fitness of a simulation model for a given set of calibration parameters, several simulation runs are necessary.

We now assume that for a given set of calibration n parameters $(p_1,...,p_n)$ the fitness $f_p$ has been determined. Then we disturb the parameter set.

We first describe how to disturb the parameter set in the case when each parameter $p_i$ can assume only discrete values. That is, for each value of pi there is a unique value $p_i+$ that is the next bigger value and a unique value $p_i^-$ that is the next smaller value. This is the case for the pedestrian stream models described in former inventions, where we calibrate by using optimization algorithms on a set of discrete parameters.

For each $p_i$, with i varying from 1 to n, we determine the fitness $f_{p,i}^+$ of the parameter set $(p_1,...p_{i-1}, p_i^+ ,p_{i+1}..., p_n)$, where $p_i$ has been augmented to the next bigger value $p_i^+$ and all other parameters values $p_j$, j≠i, have been left undisturbed.

For each $p_i$, with i varying from 1 to n, we determine the fitness $f_{p,i}^-$ of the parameter set $(p_i,...p_{i-1}, p_i^- ,p_{i+1}..., p_n)$, where $p_i$ has been decreased to the next smaller value $p_i^-$ and all other parameters values $p_j$, j≠i, have been left undisturbed.

We now introduce a number of measures and means to quantify the effect of the disturbances and make the effects comparable. Note that slightly different definitions would also work, although the ones given below are, perhaps, the most intrinsic. We calculate, for all i varying from 1 to n, the mean local fitness of the parameter set locally disturbed in $p_i$. We propose to determine the mean local fitness as follows.

$$f_{p,i}^{\text{local}} = (f_{p,i}^+ + f_{p,i}^- )/2.$$

We propose a measure of local sensitivity in pi as follows

$$s_{p,i}^{local} = (f_p - f_{p,i}^{local})/f_p ,$$

where $f_p$ is the fitness of the undisturbed parameter set p.
We propose a measure of local robustness in $p_i$ as follows

$$r_{p,i}^{local} = 1/ s_{p,i}^{local}$$

Then we propose to determine an overall disturbed fitness $f_p$ as follows:

$$f_p^{disturbed} = (f_{p,1}^{local}+...+ f_{p,n}^{local})/n$$

Based on this, we propose a sensitivity measure: the absolute value of the difference between the fitness of the undisturbed parameter set $f_p$ and the overall disturbed fitness $f_p^{disturbed}$. We divide this by the value of the undisturbed fitness to make different choices of parameter sets $p=(p_1,...,p_n)$ and $q=(q_1,...,q_n)$ more comparable.

$$s_p = (f_p - f_p^{disturbed})/f_p \text{ (overall sensitivity)}$$

We propose a measure for overall robustness

$$r_p = 1/s_p \text{ (overall robustness)}$$

The measures proposed here are immediately useful to compare parameters sets of similar fitness and to detect very sensitive and very robust parameter choices among parameter sets of similar fitness.
We further propose to refine the definition of the disturbed fitness by using a weighted sum instead of a simple sum. This allows giving special weight to parameters $p_i$ that are known to be more sensitive than others. Especially sensitive parameters pi are detected by comparing the local sensitivity (or robustness) for all $p_i$, i=1,...,n.
In that case the definition of the disturbed fitness is

$$f_p^{disturbed} = (k_1 f_{p,1}^{local}+...+ k_n f_{p,n}^{local}),$$

where $k_i$ are the weight coefficients.
We further propose to enlarge the concept of disturbed fitness by allowing to vary the parameters $p_i$, (i=1,.., n) by not only one value (augment to the next bigger or decrease to next smaller) but by 2 or more values simultaneously. We further propose to enlarge the concept of sensitivity by considering local disturbances of parameter pairs $(p_i, p_j)$ from the parameter set $(p_1,...,p_n)$. There are n!/(2!(n-2)!) possible pairs.
For each possible pair a local fitness can then by determined as

$$f_{p,i,j}^{local} = (f_{p,ij}^{++} + f_{p,ij}^{+-} + f_{p,ij}^{-+} + f_{p,ij}^{--})/4$$

and
the local sensitivity as

$$s_{p,i,j}{}^{local} = (f_p - f_{p,i,j}{}^{local})/f_p$$

In this case, the disturbed fitness has the following form:

$$f_{p\,i\,j}{}^{disturbed} = (f_{1\ p,i,j}{}^{local} + f_{2\ p,i,j}{}^{local} + \dots f_{2!\ (n-2)!/n!})\ 2!\ (n-2)!/n!$$

Here we calculate the mean fitness for all possible pairs of disturbed calibration parameters from a set $p=(p_1,\dots,p_n)$.

The generalization to k-tuples of disturbances is straight forward (k =1,...,n). Altogether we have n!/(k!(n-k)!) possible k-tuples. For calculating $f_p{}^{local}$ one has to calculate the fitness for all possible selections of parameters.

For calculating the disturbed fitness for every number k of disturbed calibration parameters, one needs to calculate the mean, going through all possible selections of k parameters from a set $p=(p_1,\dots,p_n)$. The disturbed fitness then has the following form:

$$F_p{}^{k,\ disturbed} = (f_1{}^{local} + f_2{}^{local} + \dots f_{k!\ (n-k)!/n!})\ k!\ (n-k)!/n!,$$

where k denotes the number of disturbed calibration parameters. Indices 1, 2... k! (n-k)!/n! is the number of possible combinations of disturbed parameters (the number of possible k-tuples out of the set $(p_1,\dots,p_n)$).

For every particular number k of disturbed calibration parameters, one can calculate the corresponding sensitivity:

$$S^k{}_p = (f_p - F_p{}^{k,\ disturbed})/f_p$$

Finally, we introduce the overall fitness of a parameter set:

$$F_p{}^{overall} = (f_p + F_p{}^{1,\ disturbed} + \dots + F_p{}^{n,\ disturbed})/(n+1).$$

This is a averaged value for fitness for all possible numbers of disturbed calibration parameters (from 1,...,n), that it, from 1-tuples to n-tuples. Here, $f_p$ is the fitness for undisturbed parameters. Indices i=1, 2,..., n in $F_p{}^{i,disturbed}$ denote the number of disturbed calibration parameters. By including the value of the undisturbed fitness we include the initial precision of a model.

**Disturbed fitness, sensitivity and robustness for parameter sets with continuous values:**

The detailed definitions of disturbed fitness, sensitivity and robustness given above are suitable for cases where the values of the parameters are discrete. In case of continuous values a generalization of the definitions is easily possible. One way to achieve this is as follows: For each value pi, a disturbance interval $[p_i-a_i,p_i+b_i]$ is chosen. The disturbed fitness is then determined by the formulae above with $p_i-a_i$ as the next smaller value and $p_i+b_i$ as the next bigger value. The concept can be further refined by calculating the fitness for intermediate values in the disturbance interval and forming a suitable weighted sum of the fitness from all intermediate values (corresponds to numerical integration).

Another way to determine disturbed fitness values is to randomly disturb the parameters pi within given intervals and calculate the (disturbed) fitness for each random disturbance. In that case we propose to determine a mean disturbed fitness by summing the disturbed fitness values and dividing by the number of disturbances.

**Ad step 2: Selection method**

We describe a method to select good parameter choices based on the fitness and the robustness. For this we propose to systematically disturb the parameter sets, to measure and compare the obtained fitness and the sensitivity of the disturbed parameter sets.

We propose to systematically investigate sensitivity in the following way:

- We suggest to determine the sensitivity for the case when we disturb the parameters $p_i$, (i=1,..,n) by only one value (augment to the next bigger or decrease to next smaller).
- We propose to determine the sensitivity for the case when we vary the parameters by 2 or more values.
- We propose to determine the sensitivity for the case when pairs (in the general case k-tuples) of parameters $(p_1,...p_k)$ are disturbed.

We further propose the use of thresholds to group parameter sets in clusters of similar fitness and/or robustness, to make practical comparison possible and to exclude inacceptable parameter choices. E.g. parameter sets with fitness below a certain threshold can be excluded. E.g. among parameter sets with similar fitness, the more robust can be chosen and among parameter sets with similar robustness, the fittest can be chosen.

We suggest the following automated selection method:

If one needs to select one parameter set among several sets, one can perform it by comparing the pairs of sets. Therefore, without loss of generality, we describe our selection method comparing two parameter sets.

Thus, suppose we have two parameter sets $(p_1,...,p_n)$ and $(q_1,...,q_n)$ and we need to select the best one.

Compare the fitness values for the undisturbed and disturbed parameters:

- If for some particular parameter set p initial fitness $f_p$ and all local fitness values for all numbers of disturbed calibration parameters k, $F_p^{k,disturbed}$, are higher than for parameter set q, that is $f_p > f_q$ and $F_p^{k, disturbed} > F_q^{k, disturbed}$ , then parameter set p is preferable to q.
- else, calculation of sensitivities is necessary:

    i. Calculate the sensitivity $S^k_p$ and $S^k_q$ for each number k of disturbed calibration parameters. If for all k, $S^k_p < S^k_q$, select the one with minimal sensitivity.

    ii. Else, if not for all k $S^k_p < S^k_q$ , then compare $F_p^{overall}$ and $F_q^{overall}$ and select the one with maximal $F^{overall.}$

If the number of parameters $(p_1... p_n)$ is large (n large) it may not be economical to go through all possible disturbances. Then we suggest to restrict the selection method to disturbances of one at a time or pairs of parameters.

**Ad step 3: Visualization**

We propose to plot the fitness values, average fitness values, the local and global disturbed fitness values, the local and global sensitivity values and/or equivalently the local and global robustness values to make the results visually accessible, especially in cases where an automatic choice of the best parameter set as described in step 2 is not possible or economical.

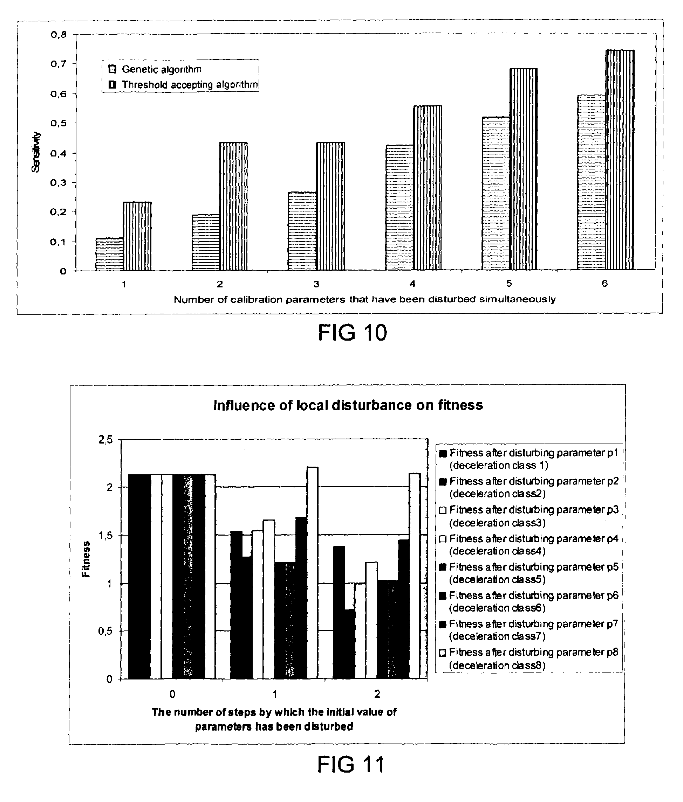

We propose further to use plots (see figures 11 to 14) as a means to evaluate different algorithms to automatically obtain fit parameter values, that is, different algorithms to automatically calibrate the model. The suitability of such algorithms, e.g. so-called genetic algorithms or so-called threshold-accepting algorithms, depends on the situation.

All plots in figures 11 to 14 are examples built for the pedestrian stream model described earlier to analyze deceleration class parameters robustness.

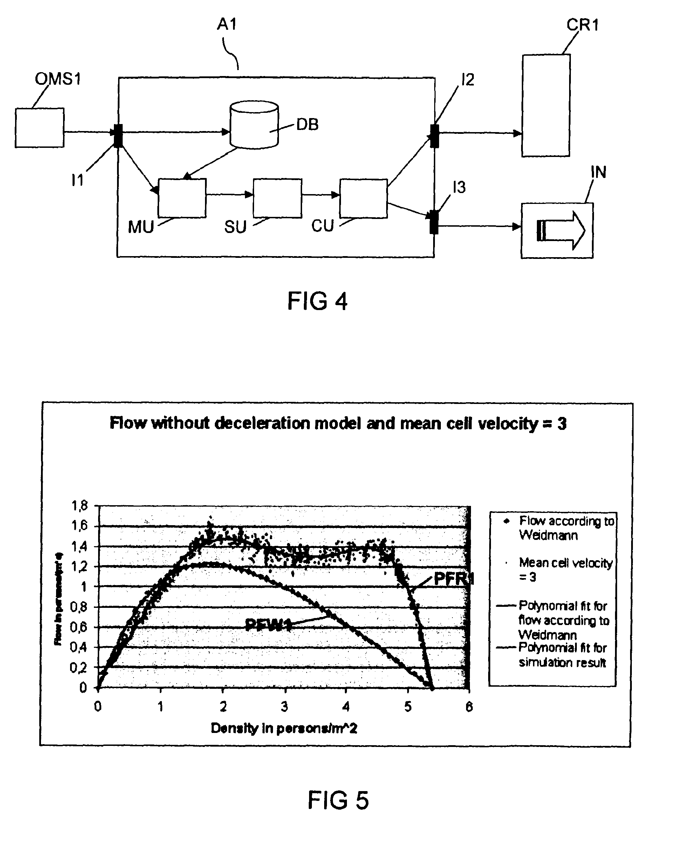

Figure 4 shows a schematic block diagram of an apparatus A1 for efficient configuration of a motion simulation device according to an aspect of the present invention. Said apparatus A1 comprises:

A storage unit DB for storing a plurality of sets of model parameters $(p_1,...,p_n)$ and/or model instances MI. The model parameters $(p_1,...,p_n)$ and the model instances MI can be provided manually based on empirically knowledge and/or expertise of a man skilled in the art. The model parameters $(p_1,...,p_n)$ and the model instances MI can also be derived from observations of a phenomenon (e.g. motion behavior of pedestrians crossing a street) after analyzing the phenomenon. Furthermore the model parameters $(p_1,...,p_n)$ and the model instances MI can also be provided based on data of online monitoring (e.g. video streaming) a phenomenon (e.g. behavior of individuals attending a mass event).

A measurement unit MU for determining for each set of the model parameters $(p_1,...,p_n)$ the fitness $f_p$ and the sensitivity $s_p$.

A selection unit SU for selecting among the parameter sets having similar fitness the parameter set having the lowest sensitivity and/or selecting among the parameter sets having similar sensitivity the parameter set having the highest fitness for operating the motion simulation device.

A configuration unit CU for configuring the motion simulation device according the selected parameter set. Advantageously the motion simulation device is automatically configured as a function of the selected parameter set and/or model instances.

Optionally said apparatus A 1 can comprise an interface I1 to an online monitoring system OMS 1 (e.g. video system or RFID sensor system) and/or an interface I2 to a control room for e.g. monitoring visitors of a mass event (e.g. visitors in a soccer stadium). This facilitates that the model parameters or model instances are based on actual situational situations. Without time delay configuration and calibration data will be derived in interaction of the measurement unit MU, the selection unit SU and the configuration unit CU. If the apparatus A1 comprises also an interface I2 to a control center CR1. The control center CR1 receives online and situational dedicated simulation model data which secures that realistic (means close to reality) predictions of the motion behavior of the monitored visitors can be made. Furthermore specific (dedicated to an actual situation) instructions to security and emergency staff (e.g. ambulance men, fire fighters) can be made. Optionally said apparatus A 1 can comprise an interface I3 to indicators IN for controlling movements of pedestrians and/or vehicles based on the predicted behavior of the tracked pedestrians and/or vehicles. Controlling of the movements of pedestrians and/or vehicles is performed by using indicators, e.g. information signs, text information on boards or by opening/closing of gateways/doors/streets. This enables a situation adequate online controlling, directing, and regulating of pedestrian streams or vehicles based on data provided by a prediction model. The prediction model can be calibrated using parameter data derived from reality data of the monitored entities (e.g. pedestrians, vehicles).

The apparatus A1 can be a personal computer (PC) or Laptop comprising a data base and software components for realizing the measurement unit MU, the selection unit SU and the configuration unit CU. The connections to online monitoring system OMS1 and to the control center CR1 can be accomplished wireless (e.g. via WLAN) and/or hard wired (e.g. LAN, Ethernet).

In the following identification of suitable parameters is described:

Pedestrian stream simulations imitate the flow of a crowd at a certain place at a certain time. Input parameters regarding the "where", the "when" and the "who" are required. Parameters concerning the place, the "where", once topology and area of observation is chosen, the topology of the infrastructure is static in the frame of time and do not need on-line adjustment. The time of day of the simulation can be considered, because it has an effect on the number of people present, the choice where people go and how they walk. Simulation models for pedestrian streams represent these aspects by several input values, such as:

- The number of persons in the simulation area and their distribution and hence the crowd density in the simulation area. This data can be extracted on-line from video data. Restrictions are coverage and measurements errors. That is, cameras may not be installed at every spot so that full area of interest is not totally covered and the measurements usually are subject to error. The number of persons and distribution and hence the crowd density can be read into the simulation. In case of incomplete data, the data must be extrapolated.
- The assignments of targets or attraction points to which people walk and identification of sources where people come from. From video data, where people are traced, a distribution of the goals and sources can be extracted. Radio technologies may also be used. One can assign targets and sources in the simulations stochastically. That is, in an area of measurement a simulated person is assigned to a certain goal with a probability that corresponds to the statistical distribution extracted from the measurement. A source e.g. entrance, "produces" new persons at rate as observed.
- The human behavior parameters that vary with the type of crowd, such as nationality, culture, gender distribution, age distribution and also the time of day, such as level of fitness, exhaustion or even the weather. All these differences ultimately show their effect in the way people walk - as individuals in an open space and as members in a crowd. There is an aggregated model that is considered to be suitable to capture most - or at least many of the relevant - behavioral parameters in a very simple concept: The dependency of the walking speed on the density. Or, equivalently, the dependency of the flow on the density. This dependency is expressed in the so-called fundamental diagrams. One can calibrate the human behavior by adjusting the walking speed to the fundamental diagram.

In the following building a library of model parameters or model instances is described (the library is stored in the storage unit DB of the apparatus A1):

- One can introduce a learning phase to the simulator that may last several days and is performed prior to on-line usage. During that phase, the model "learns" characteristic parameters for a variety of scenario and "remembers" the best values for each of them. In particular, regarding human behavior, it does not only memorize the fundamental diagram for each scenario, but also the optimal calibration parameters. These optimal calibration parameters are calculated by the automatic method described in a former invention. That is, after collecting the data for different scenarios, one obtains a library of optimal parameters for different scenarios.

- This phase can be performed in the following way. First, the data is collected and a finite number of scenarios are extracted. For the purpose of pedestrian stream simulations one can label the scenarios by their differences with respect to the relevant parameters: number of persons, distribution of persons, distribution of goals and sources, human behavior as captured in the fundamental diagram. This has the advantage that the number of labels is very restricted, whereas labels based on "natural parameters" such as time of day, type of event, are countless and may be very hard to differentiate. This possibly leads to a large number of rather vague scenarios. However, the number of extracted scenarios should be as low as possible.

Figure 5 shows an exemplary curve of an uncalibrated simulation model. In figure 5 the x-axis represents the "Density in persons per square meter ($m^2$)" and the y-axis represents the "Flow in persons" (in m*s). A model parameter may describe observed entity motion behavior and can therefore be obtained from real world observation (e.g. via video observation). Furthermore one can determine model parameters manually for configuration of a motion simulation model. Hence, said model parameter is obtained artificially. Said model parameter may be used for affecting the behavior of the motion simulation model in terms of configuration parameters for rules being used by the motion simulation model. A set of said artificially determined motion parameter can be summarized in deceleration classes. Deceleration classes can be used for indicating how much entities decelerate in case a certain density occurs. Thus, deceleration classes configure a rule being part of the motion simulation model, the rule modelling a deceleration behavior. In figure 5 the solid curve PFW 1 shows the polynomial fit for flow according to Weidmann. The dots on the curve PFW1 represent the respective flow according to the Weidmann model. The solid curve PFR1 shows the polynomial fit for the simulation result. The dots on the curve PFR1 represent the respective results assuming a mean cell velocity of 3.A static parameter may be determined a priori to the simulation and are fixed as regards the observed time interval, such as the location based parameters. Different scenarios can be identified as a function of said static parameters. Model instances may be determined as a function of static parameters. It may be the case that only a selection of static parameters is known. A model parameter may not be observable or configurable, but may affect a motion simulation model. A model parameter may be comprised in a deceleration class. The motion simulation device may operate according to a motion simulation model, defining abstract motion parameters. A motion parameter is for instance a parameter describing characteristics of a motion of an entity. Hence, a motion parameter is not restricted to a parameter describing a pedestrian behavior but may furthermore be directed to movements of any entity, such as a car, a plane, a robot, a signal transmitting device and/or a traffic participant. A signal transmitting device is for instance a mobile phone which is carried through different cells and/or radio cells. Furthermore, motion of vehicles having a GPS-transmitter attached can be described by a motion parameter. For obtaining entity motion predictions a motion simulation model can be applied. A motion simulation model generally describes entity motion behavior in an abstract way, which can be instantiated according to specific real world scenarios. A motion simulation model may indicate certain parameters without assigning values to said parameters. The motion simulation model can furthermore indicate that certain parameters may be required for predicting entity motion behavior. It is of advantage, to create a set of rules and/or an ontology to define said motion simulation model. A further possibility to implement said motion simulation model is to apply a software or a computer program product defining configuration data of a machine providing said motion simulation model. The person skilled in the art furthermore appreciates other ways to provide the motion simulation model.

The simulation results of the simulation model without calibration show that it is suitable to qualitatively reproduce the fact that the denser the crowd, the slower the velocity of each person. That is, people are hindered by each other in their movement. In simulation models the simulated pedestrians appear to be 'short sighted' and do not decelerate before they literally 'bump' into a dense crowd. This means that uncalibrated simulation models to not show a realistic motion behavior of pedestrians.

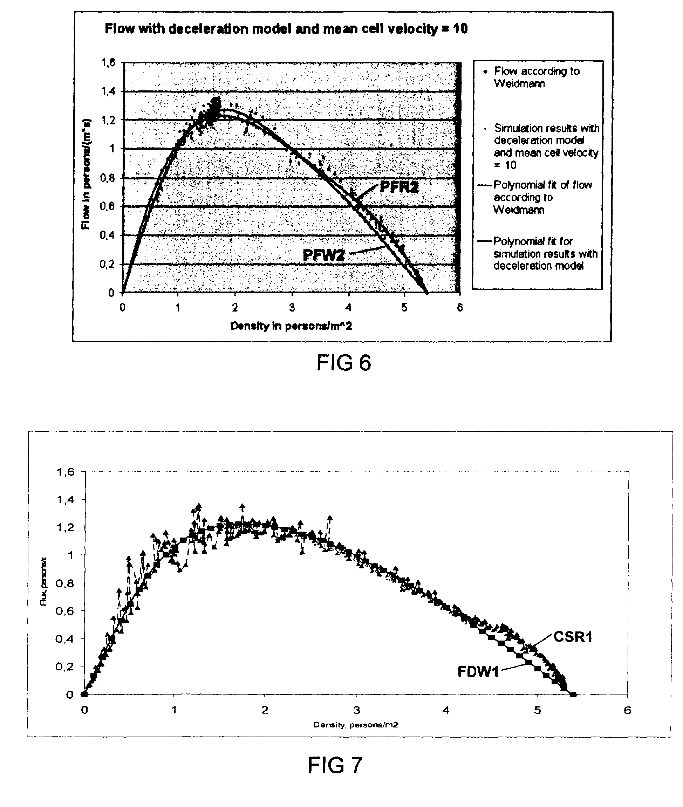

Figure 6 shows an exemplary curve of a calibrated simulation model. To meet the challenge of reproducing the given fundamental diagram quantitatively we introduce the new concept of deceleration classes. The basic idea is to measure the density of the crowd in the direction in which a person moves and then to adapt the person's velocity to the one suggested by the fundamental diagram of choice. The execution of the idea, however, is a little more complicated because the world of a cellular automaton is discretized through cells. Also, we do not want to loose individual differences in the human behavior. Measuring the density means to count the number of persons in a reasonable number of cells that lie in the field of vision of a walking person. The field of vision is aligned with the direction in which the person walks. By this we reduce the basically two dimensional problem to the quasi one-dimensional situation for which fundamental diagrams are usually employed. As a result the pedestrians are no longer 'short sighted' but react to congestions ahead of them. The model is first calibrated such that the mean free flow cell velocity - the average number of cells a person covers per simulation step when the path is free. The cell velocities are normally distributed about this mean cell velocity (mcv). We get 2 x mcv - 1 discrete velocities. When a person is surrounded by a dense crowd on the way to the chosen target, which lies in the direction of the lowest potential, the person's speed is adapted: More precisely, each person's desired velocity is temporarily reduced. Note that it still depends on the availability of a free path, whether the person can really achieve this new desired velocity. The number of cells by which the desired velocity of an individual is reduced for a certain density also depends on the original free flow velocity of the person, so that we maintain the individual differences in the walking speed. In our approach, the speed reduction depends on the density and free flow velocity. The dependency is expressed in a set of rules that involve artifcial calibration parameters. Since the model's world is partitioned in cells the densities are discrete too. We therefore speak of density classes and, accordingly, of 'deceleration classes' to denote the calibration parameters that we introduced in the rules. Now, the deceleration classes must be tuned according to the fundamental diagram. This means, the model can be calibrated. The impact of the calibrated deceleration classes on the simulation results is evident in the diagram of figure 6. We achieve an excellent fit with the fundamental diagram we used for calibration (e.g. the Weidmann diagram or model). In figure 6 parameters are tuned to an excellent fit with the fundamental diagram. In figure 6 the x-axis represents the "Density in persons per square meter (m$^2$)" and the y-axis represents the "Flow in persons" (in m*s). In figure 6 the solid curve PFW2 shows the polynomial fit for flow according to Weidmann. The dots on the curve PFW2 represent the respective flow according to the Weidmann model. The solid curve PFR2 shows the polynomial fit for the simulation results with deceleration model and calibration. The dots on the curve PFR2 represent the respective simulation results with deceleration model and a mean cell velocity of 10. The calibration of the motion simulation model can be based on deceleration classes and/or on disturbances.

Figure 6 shows the results of calibration of pedestrian stream models based on scenario specific fundamental diagrams (e.g. the Weidmann diagram for movements of pedestrians. We consider the fundamental diagram as a behavioral model that aggregates a multitude of sociocultural and even scenario dependent parameters. Ultimately, the differences in -say gender, nationality, fitness dependent on day time find their expression in the way people walk as individuals and surrounded by a crowd. The walking speed is the crucial parameter. It depends on the density. Thus, we do not need to identify each socio-cultural parameter of which, as a rule, we cannot quantify the influence anyway. Instead we feed the appropriate fundamental diagram into the simulation. In a learning phase, we adjust the way people slow down when they are walking in a crowd until the particular fundamental diagram is faithfully reproduced by computer simulations of our model. To exemplary illustrate the calibration approach we have chosen a potential-based cellular automation model. We suggest so-called deceleration classes in this cellular automaton model to slow down persons when they approach a crowd on their way to a chosen target. We demonstrated that the calibrated deceleration classes are suitable to obtain a very good fit to a given fundamental diagram. In an ideal set up, each scenario would have its own fundamental diagram. We therefore believe that the sort of calibration suggested here, is absolutely necessary to tune a simulation model to the scenario of interest. Data gained by video analysis or radio technologies (RFID solutions) allow to automatically calibrate a simulation tool, even online or in real-time. Calibrations based on fitness and robustness allow precise predictions of motion behavior of entities (e.g. pedestrians or vehicles).

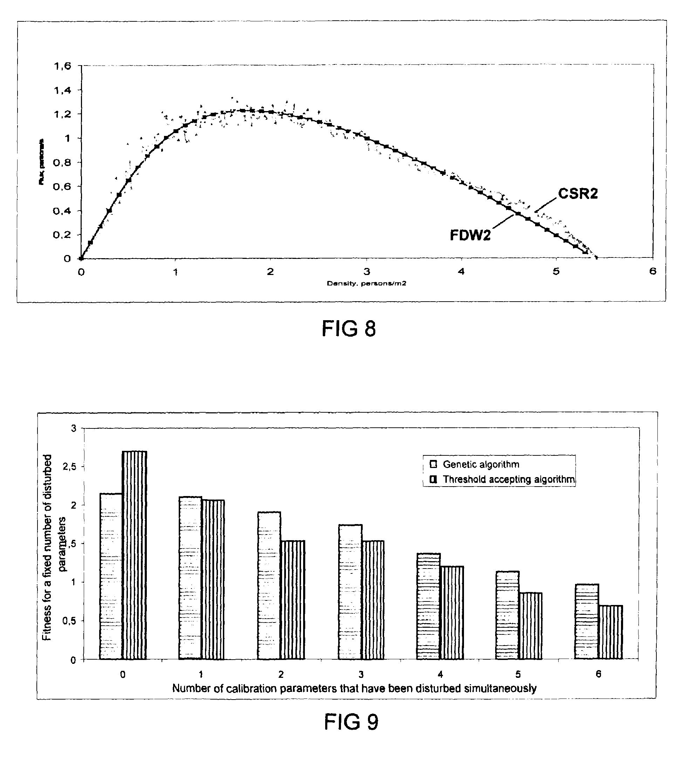

Figures 7 and 8 show diagrams illustrating optimization results using the genetic algorithm presented in figure 3. Let us now apply the proposed method for selecting configuration (especially calibration) parameters (see figure 3) to compare the parameter values obtained for the pedestrian stream model from the genetic and the threshold accepting algorithms. The initial fitness of the simulations calibrated with the threshold accepting algorithm is a little higher, than the one for the genetic algorithm ($f_{\text{threshold accepting}} > f_{\text{genetic}}$). Figures 7 and 8 suggest that both methods yield a good calibration. However, when we disturb the deceleration classes, we clearly obtain better fitness values for the genetic algorithm (see diagram of figure 9). Therefore, the sensitivity analysis is the next step. Figure 10 shows the results: The parameters obtained from the genetic algorithm prove to be more robust.

Figure 7 shows a first diagram illustrating optimization results with the genetic algorithm. The squares correspond to the fundamental diagram by Weidmann (FDW1) and the triangles correspond to calibrated simulation results (CSR1) respectively. The corresponding fitness is 2,35 in this case.

Figure 8 shows a second diagram illustrating optimization results obtained by using the genetic algorithm. The squares correspond to the fundamental diagram by Weidmann (FDW2) and the triangles correspond to calibrated simulation results (CSR2) respectively. The corresponding fitness is 2,66 in this case.

Figure 9 shows the fitness $\boldsymbol{F^k_p}^{\text{disturbed}}$ for up to 6 deceleration classes disturbed simultaneously. Horizontal lines correspond to optimal parameter sets from a genetic algorithm, vertical lines correspond to optimal parameter sets from threshold accepting algorithm.

Figure 10 shows a diagram comparing the sensitivity value $S^k_p$ of optimal parameter sets gained from a genetic algorithm and gained from a threshold accepting algorithm respectively based on disturbed deceleration classes. Horizontal lines correspond to optimal parameter sets from a genetic algorithm, vertical lines correspond to optimal parameter sets from threshold accepting algorithm.

For practical applications of pedestrian stream simulations, reliable quantitative predictions are required. In oder to fulfill these requirements, a model for pedestrian simulation must be calibrated and robust. In this invention we propose methods of automatic calibration of pedestrian stream simulations and a method to select robust parameter sets. For the first task, calibration of a model, we propose two fast automatic methods: a genetic and a threshold accepting algorithm. The adjustments are based on automatic calibration of the walking velocity of pedestrians so that a given fundamental diagram is faithfully reproduced. For the second requirement, robustness of the model, we introduce a method to measure and judge the robustness of our calibration. The proposed method is applied to select robust parameter sets so that small deviations from the optimal parameter set will not lead to disproportionally large changes in the simulation results. The method systematically disturbs parameter sets, then measures and compares how the sensitivity of the system's reaction. Thus, the introduced approach is fast and flexible. It allows easy automatic adaptations of the model to social-cultural behavior and changing circumstances and can be applied to a wide class of models. Future developments will focus on analyzing real time data and will demand fast model adaptations to situational changes, e.g in the walking behavior.

Thus, automatic and robust calibration, as suggested here, is an important step towards real time application of pedestrian stream simulations.

As mentioned before, visualization is a proper means to compare parameters and to select appropriate parameters for calibration based on the comparison. A comparison based on visualization can be performed manually and/or automatically (e.g. by using spread sheets or by pattern recognition mechanisms). Therefore we propose to plot the fitness values, average fitness values, the local and global disturbed fitness values, the local and global sensitivity values and/or equivalently the local and global robustness values to make the results visually accessible, especially in cases where an automatic choice of the best parameter set as described in step 2 ("Selection Method") of figure 3 is not possible or economical.

We propose further to use plots (see figures 11 to 14) as a means to evaluate different algorithms to automatically obtain fit parameter values, that is, different algorithms to automatically calibrate the model. The suitability of such algorithms, e.g. so-called genetic algorithms or so-called threshold-accepting algorithms, depends on the situation.

All following plots in figures 11 to 14 are examples built for the pedestrian stream model described earlier to analyze deceleration class parameters robustness.

Figure 11 shows a sensitivity analysis with local disturbances. For each parameter $p_i$, the local fitness $f_{p,i}^{\ local}$ is displayed. The plot in figure 11 visualizes the local fitness if one of the parameters $p_i$ out of a parameter set $p = (p_1,..., p_n)$ is disturbed at a time and to different extents.

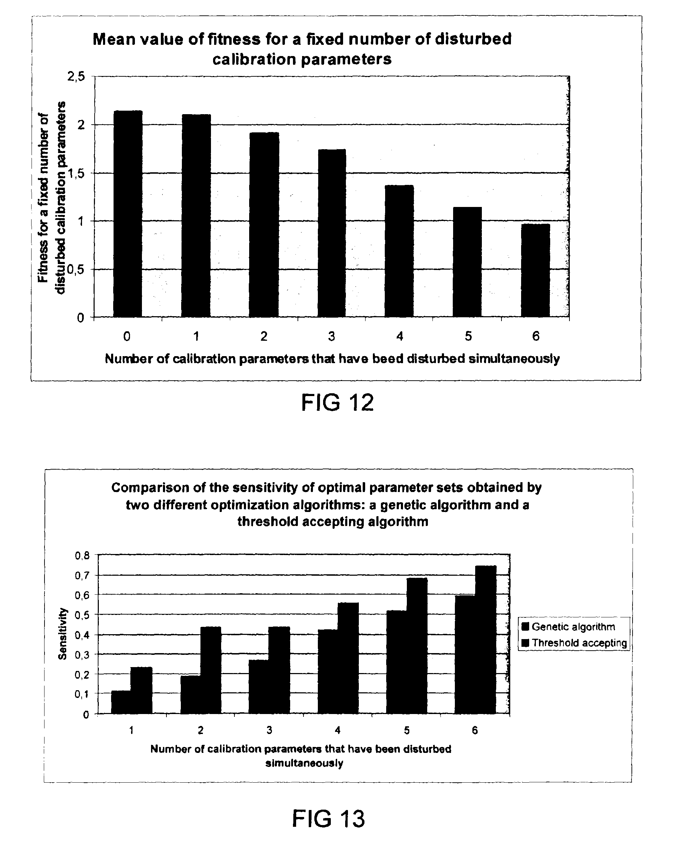

Figure 12 shows a plot illustrating how the fitness decays with the number of parameters pi that are disturbed. Note that the decay of fitness may be sudden when a particularly sensitive parameter is added to the set of disturbed parameters. In Figure 12, the fitness $F_p^{k,\ disturbed}$ is plotted when k paramters (k-tuples) are disturbed simultaneously. As a disturbed parameters deceleration class parameters have been taken.

The diagram in figure 13 compares the sensitivity of the optimal parameter sets obtained by two different optimization algorithms. It also shows how the fitness decays with the number of parameters $p_i$ that are disturbed. Note that the exact results of the plots depend on the order in which the parameters $p_i$ are disturbed. The decay may be sudden when a particularly sensitive parameter is added to the set of disturbed parameters. This type of diagram helps to judge which optimization algorithm performs better in the sense that it produces the more robust solution candidates. In figure 13, the deceleration class parameters obtained from a genetic and a threshold accepting algorithm are compared. One observes that the parameter set suggested by the genetic algorithm is less sensitive than the parameter set suggested by the threshold accepting algorithm. Therefore, in this case, the parameters from the genetic algorithm are preferable.

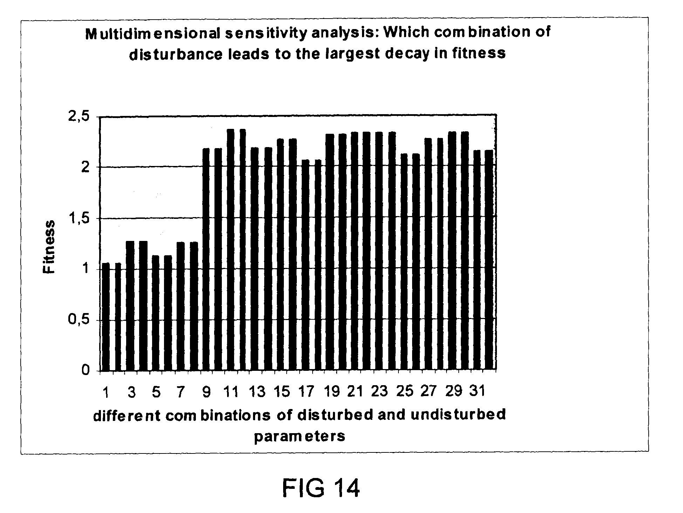

Figure 14 shows a plot illustrating a multidimensional sensitivity analysis and displays the fitness for a number of different disturbance scenarios. That is, in each scenario a different selection of parameters from $\{p_1,...,p_n\}$ are disturbed. Each selection is given an index. In figure 14 plot different combinations of changed and unchanged parameters and visualize which parameters or which combination of parameters have the greatest influence on the fitness. A very sensitive parameter can be spotted by the abrupt change in the plotted fitness whenever that parameter changes between disturbed to undisturbed states.

The described invention provides a method to measure and judge the robustness of parameter sets and to select robust parameter sets to ensure that a small deviation from the optimal parameter set will not lead to large incorrect changes in the simulation results.

The invention consists in principle of the following steps:

Step1:

We propose a concept of sensitivity - and equivalently robustness - suitable for the calibration task described above.

 o We call a parameter set sensitive, if disturbances in the parameter set lead to a strong decay of fitness. In earlier inventions, we called a parameter set fit, if it leads to a precise calibration that is a good rendition of the target functions. The parameter set is robust, if its sensitivity is low.
o We also propose quantitative measures for sensitivity and, equivalently, robustness that are described further below.

Step 2:

We describe a method to select good parameter choices based on the fitness and the robustness. For this we propose to systematically disturb the parameter sets, to measure and compare the sensitivity of the disturbed parameter sets.

Step 3:

In addition we propose several ways to visually compare the fitness and the robustness or sensitivity of parameter sets with the help of suitable diagrams. Step 3 is optional because it is not mandatory to perform a visualization for comparing the parameters.
The invention allows robust calibration of prediction models according measured phenomenon. That is, small errors or variations in the calibration parameter set and/or the measured situation do no longer (risk to) lead to a large decay the precision of the model. Thus the behavioral prediction made by the model becomes much more reliable. This holds especially in the case of a crowd behavior predicting the behavior of the tracked pedestrians and/or vehicles (E1 - En) predicting the behavior of the tracked pedestrians and/or vehicles (E1 - En) predicting the behavior of the tracked pedestrians and/or vehicles (E1 - En)ion device (pedestrian stream simulator) such as the one that has been considered in a number of earlier invention reports by the authors and/or their colleagues. Prediction models are usually accessible through a program that can be bought or for which licenses can be bought. The calibration of a prediction model is necessary for its use. Even for each calibration a number of steering decisions must be made by the user. These are usually demanded by the program and the choices are made available to the user by presenting diagrams and/or tables. Through this, when using such a prediction model, it becomes immediately obvious whether or not/which

- calibration

- automatic calibration

- robustness methods

are part of the simulation device.

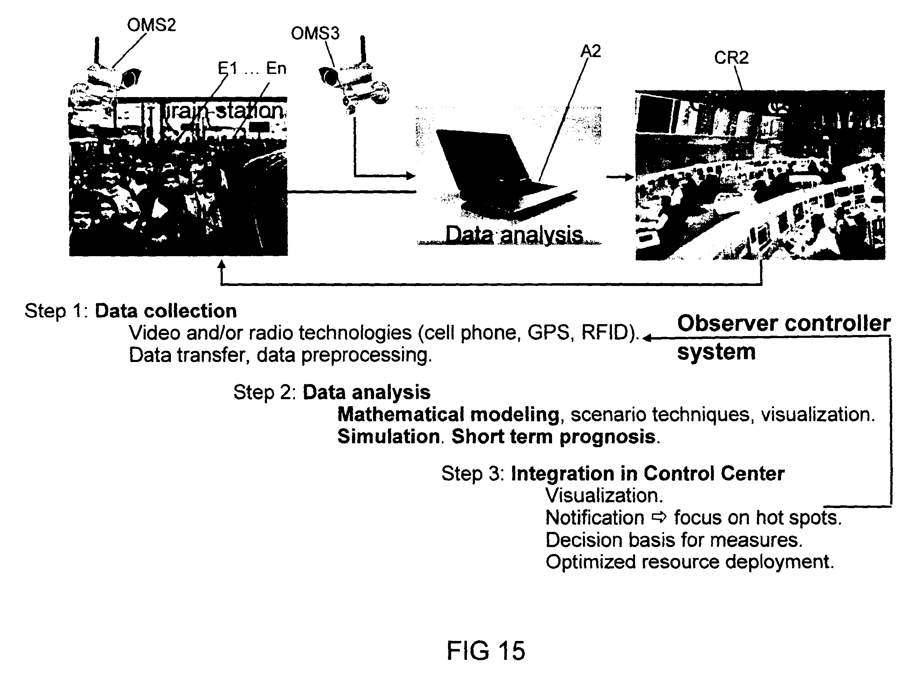

Figure 15 shows an exemplary scenario using the inventive method and apparatus for a control center. Pedestrians E1 - En are observed by an online monitoring system OMS2, OMS 3 (e.g. video tracking mechanisms, cameras) and/or radio technologies (e.g. cell phones, GPS, RFID). The gained data can be pre-processed in the online monitoring system (e.g. filtered according a search pattern) before they are transferred to the apparatus A2 for configuring the simulation device. Advantageously the data to be transferred from the online monitoring system OMS2, OMS3 to the apparatus A2 are compressed and/or encrypted. The apparatus A2 performs a data analysis of the received data to provide calibrated parameter sets for the motion simulation device used in the control center CR2. The data analysis uses mathematical modelling, scenario techniques and/or visualization for simulation runs and/or short term prognosis. Based on the results of the data analysis calibrated parameter sets for the motion simulation device in the control center CR2 are provided. Based on said calibrated data the control center CR2 can use a motion simulation tool to reproduce arbitrary fundamental diagrams (e.g. Waldmann diagram) with high accuracy. The calibrated model reproduces a phenomenon expressed through fundamental diagrams. Furthermore the simulation device used in the control center CR2 is automatically calibrated in real time based on the online monitored data provided by the online monitoring system OMS2, OMS3. Thus the crowd simulations of the control center CR2 correctly reproduce real behavior depending on the actual situation provided by the online monitoring system OMS2, OMS3. The control center CR2 receives online and situational dedicated simulation model data which secures that realistic (means close to reality) predictions of the motion behavior of the monitored visitors can be made. Furthermore specific (dedicated to an actual situation) instructions to security and emergency staff (e.g. ambulance men, fire fighters) can be made. This facilitates an optimized resource deployment by the control center CR2.
The data transfers to and from the apparatus A2 can be accomplished wire less (e.g. by WLAN, infrared or radio) and/or via cable connections. The apparatus A2 can be a workstation or a personal computer comprising software programs for performing the inventive method. The apparatus A2 can also be implemented as a web server having Internet or Intranet connections to the online monitoring system OMS2, OMS3 and to the control center CR2.
Every year people die at mass events when the crowd gets out of control. Urbanization and the increasing popularity of mass events, from soccer games to religious celebrations, enforce this trend. Thus, there is a strong need to gain better control over crowd behavior. Simulation of pedestrian streams can help to achieve this goal. In order to be useful, crowd simulations must correctly reproduce real crowd behavior. This usually depends on the actual situation and a number of socio-cultural parameters. In other words, what ever model we come up with, it must be calibrated. Fundamental diagrams capture a large number of the socio-cultural characteristics in a very simple concept. In this invention a method to calibrate a pedestrian stream simulation tool is described to reproduce arbitrary fundamental diagrams (e.g. Waldmann diagram) with high accuracy. That is, it correctly reproduces a phenomenon (e.g. a given dependency of pedestrian speed on the crowd density).

Reference Numbers

**[0108]**

| C1 - C3 | Cell |
| E1 - En | Entity |
| $p_i$ - $p_n$ | Model Parameter |
| MI | Model Instance |
| CBPM | Crowd Behavior Prediction Machine |
| S1 - Sn | Method Steps |
| A1, A2 | Apparatus |
| I1 - I3 | Interface |
| IN | Indicator |
| OMS 1 - OMS3 | Online Monitoring System |
| MU | Measurement Unit |
| SU | Selection Unit |
| CU | Configuration Unit |
| CR1, CR2 | Control Room |
| PFW1, PFW2 | Polynomial fit for flow according to Weidmann |
| PFR1, PFR2 | Polynomial fit for the simulation results |
| FDW1, FDW2 | Fundamental diagram according to Weidmann |
| CSR1, CSR2 | Calibrated simulation results |

**Claims**

1. A method for efficiently configuring a motion simulation device, wherein the motion simulation device is based on a simulation model for ensuring a precise and reliable reproduction of a phenomenon of interest, the method comprising the steps of:

   providing sets of model parameters ($p_1$,...,$p_n$) representing motion behavior of entities (E1 - En), wherein sets of model parameters ($p_1$,...,$p_n$) are achieved from a data base (DB) and/or gained from an online monitoring system (OMS1 - OMS3);

determining for each set of the model parameters $(p_1,...,p_n)$ the fitness $f_p$ and the sensitivity $s_p$;

selecting among the parameter sets having similar fitness the parameter set having the lowest sensitivity and/or selecting among the parameter sets having similar sensitivity the parameter set having the highest fitness for operating the motion simulation device; and

configuring the motion simulation device with the selected parameter set.

2. The method according to claim 1, wherein the step "determining for each set of the model parameters $(p_1,...,p_n)$ the fitness $f_p$ and the sensitivity $s_p$" comprises:

for each set of model parameters $(p_1,...,p_n)$ which reaches determined thresholds for fitness and sensitivity:

systematically disturbing the set of model parameters $(p_1,...,p_n)$;

measuring the fitness and the sensitivity of the disturbed parameter sets;

comparing all disturbed parameter sets regarding the respective fitness and the respective sensitivity; and grouping disturbed parameter sets having similar fitness and grouping disturbed parameter sets having similar sensitivity.

3. The method according to claim 2, wherein the step "comparing all disturbed parameter sets regarding the respective fitness and the respective sensitivity" comprises originally undisturbed parameter sets which stay below the threshold for sensitivity and are within the margins for fitness.

4. The method according to claim 2 or 3, wherein the step "systematically disturbing the set of model parameters $(p_1,..., p_n)$" is performed by randomly disturbing the parameters $p_i$ within given intervals.

5. The method according to one of the preceding claims, wherein the motion simulation device is used for simulating a pedestrian stream model.

6. The method according to one of the preceding claims, wherein the method is used for calibrating, especially online calibrating, of prediction models according the measured phenomenon.

7. The method according to one of the preceding claims, further comprising:

controlling movements of pedestrians and/or vehicles (E1 - En) based on the predicted behavior of tracked pedestrians and/or vehicles (E1 - En) provided by a prediction model.

8. The method according to one of the preceding claims, wherein the model parameters $(p_1,...,p_n)$ comprise model instances (MI) derived from model parameters $(p_1,...,p_n)$.

9. The method according to one of the preceding claims, wherein the model parameters $(p_1,...,p_n)$ comprise: a number of pedestrians (E1 - En) and/or a source where pedestrians come from and/or a target where pedestrians go to and/or a pedestrian behavior parameter and/or a time stamp and/or a pedestrian's gender and/or a pedestrian's age and/or a pedestrian's speed and/or a density of pedestrians and/or a pedestrian simulation parameter.

10. The method according to claim 1, wherein the step "configuring the motion simulation device with the selected parameter set" comprises automatically online calibrating of the model parameters $(p_1,...,p_n)$.

11. The method according to claim 1, wherein the online monitoring system (OMS1 - OMS3) is a video tracking system for pedestrians and/or vehicles or is a radio system for tracking pedestrians and/or vehicles (E1 - En).

12. An apparatus (A1, A2) for efficiently configuring a motion simulation device, especially for accomplishing the method of claims 1 to 10, said apparatus (A1, A2) comprising:

a storage unit (DB) for the provided sets of model parameters $(p_1,...,p_n)$;

a measurement unit (MU) for determining for each set of the model parameters $(p_1,...,p_n)$ the fitness $f_p$ and the sensitivity $s_p$;

a selection unit (SU) for selecting among the parameter sets having similar fitness the parameter set having the lowest sensitivity and/or selecting among the parameter sets having similar sensitivity the parameter set having the highest fitness for operating the motion simulation device; and
a configuration unit (CU) for configuring the motion simulation device according the selected parameter set.

13. The apparatus (A1, A2) according to claim 12, further comprising a disturbing unit for systematically disturbing the set of model parameters $(p_1,...,p_n)$ for each set of model parameters $(p_1,...,p_n)$ which reaches the respective threshold for fitness and sensitivity and for measuring the fitness and the sensitivity of the disturbed parameter sets and for comparing all disturbed parameter sets regarding the respective fitness and the respective sensitivity.

14. The apparatus (A1, A2) according to claims 12 or 13, further comprising:

an interface (I1) to an online monitoring system (OMS 1 - OMS3) for tracking pedestrians and/or vehicles (E1 - En); and
an interface (I2) to a control room (CR1, CR2), the control room (CR1, CR2) using automatically online calibrated model parameters $(p_1,...,p_n)$ for predicting the behavior of the tracked pedestrians and/or vehicles (E1 - En).

15. The apparatus (A1, A2) according to one of the claims 12 to 14, further comprising:

an interface (I3) to indicators (IN) for controlling movements of pedestrians and/or vehicles (E1 - En) based on the predicted behavior of the tracked pedestrians and/or vehicles (E1 - En).

16. A computer program being adapted to perform the method of claims 1 to 11 on a computer.

17. A data carrier which stores a computer program according to claim 16.

FIG 1

$$p_1$$
$$p_2$$
$$...$$
$$p_n$$

CBPM

MI

## FIG 2

| providing sets of model parameters $(p_1,...,p_n)$ | S1 |

↓

| determining for each set of the model parameters $(p_1,...,p_n)$ the fitness $f_p$ and the sensitivity $s_p$ | S2 |

↓

| selection of model parameters | S3 |

↓

| configuring the motion simulation device | S4 |

## FIG 3

**FIG 4**

**FIG 5**

**Flow with deceleration model and mean cell velocity = 10**

FIG 6

FIG 7

FIG 8

FIG 9

FIG 10

FIG 11

FIG 12

FIG 13

**Multidimensional sensitivity analysis: Which combination of disturbance leads to the largest decay in fitness**

FIG 14

**Step 1: Data collection**
        Video and/or radio technologies (cell phone, GPS, RFID).
        Data transfer, data preprocessing.

**Observer controller system**

        **Step 2: Data analysis**
            **Mathematical modeling**, scenario techniques, visualization.
            **Simulation. Short term prognosis.**

            **Step 3: Integration in Control Center**
                Visualization.
                Notification ⇨ focus on hot spots.
                Decision basis for measures.
                Optimized resource deployment.

FIG 15

EP 2 354 940 A1

Europäisches
Patentamt

European
Patent Office

Office européen
des brevets

# EUROPEAN SEARCH REPORT

Application Number

EP 10 00 3655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WOLFRAM KLEIN ET AL: "Towards the Calibration of Pedestrian Stream Models", PARALLEL PROCESSING AND APPLIED MATHEMATICS, SPRINGER BERLIN HEIDELBERG, BERLIN, HEIDELBERG, vol. 6068, 13 September 2009 (2009-09-13), pages 521-528, XP019147035, ISBN: 978-3-642-14402-8 * abstract * * page 522, lines 10-25 * ----- | 1-17 | INV. G06F9/455 G06K9/00 |
| A | KARDI TEKNOMO, GLORIA P. GERILLA: "SENSITIVITY ANALYSIS AND VALIDATION OF A MULTI-AGENTS PEDESTRIAN MODEL", JOURNAL OF THE EASTERN ASIA SOCIETY FOR TRANSPORTATION STUDIES, 31 December 2005 (2005-12-31), 31 December 2005 (2005-12-31), pages 198-213, XP002631030, Bangkok ISSN: 1881-1124 Retrieved from the Internet: URL:http://www.easts.info/on-line/journal_06/198.pdf [retrieved on 2011-03-25] ----- | 1-17 | |
| A | GUO R Y ET AL: "A microscopic pedestrian-simulation model and its application to intersecting flows", PHYSICA A, NORTH-HOLLAND, AMSTERDAM, NL, vol. 389, no. 3, 9 October 2009 (2009-10-09), pages 515-526, XP026708517, ISSN: 0378-4371, DOI: DOI:10.1016/J.PHYSA.2009.10.008 [retrieved on 2009-10-09] ----- -/-- | 1-17 | TECHNICAL FIELDS SEARCHED (IPC) G06F G06K |

The present search report has been drawn up for all claims

| Place of search | Date of completion of the search | Examiner |
|---|---|---|
| The Hague | 7 April 2011 | Grigorescu, Simona |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 00 3655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TEKNOMO ET AL: "Application of microscopic pedestrian simulation model", TRANSPORTATION RESEARCH PART F: TRAFFIC PSYCHOLOGY AND BEHAVIOUR, PERGAMON, vol. 9, no. 1, 1 January 2006 (2006-01-01), pages 15-27, XP025175518, ISSN: 1369-8478, DOI: DOI:10.1016/J.TRF.2005.08.006 [retrieved on 2006-01-01] ----- | 1-17 | |
| A | D.M. HAMBY: "A Review of Techniques for Parameter Sensitivity Analysis of Environmental Models", ENVIRONMENTAL MONITORING AND ASSESSMENT, vol. 32, 30 September 1994 (1994-09-30), pages 135-154, XP002631031, ISSN: 0167-6369 ----- | 1-17 | |

**TECHNICAL FIELDS SEARCHED (IPC)**

The present search report has been drawn up for all claims

| Place of search | Date of completion of the search | Examiner |
|---|---|---|
| The Hague | 7 April 2011 | Grigorescu, Simona |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)